# FASCICULE DE BREVET EUROPEEN

(11) **EP 4 187 393 B1**
(45) Date de publication et mention de la délivrance du brevet: **21.10.2026**
(21) Numéro de dépôt: 22207128.4
(22) Date de dépôt: 14.11.2022
(51) Int. Cl.: G06F 12/14, G06F 12/02, G06F 3/06, G06F 21/53, G06F 21/70, G06F 21/74

(54) **GESTION DYNAMIQUE D'UN PARE-FEU DE MÉMOIRE**
DYNAMISCHE VERWALTUNG EINER SPEICHERFIRE
DYNAMIC MANAGEMENT OF A MEMORY FIREWALL

(30) Priorité: 25.11.2021 FR 2112497
(43) Date de publication de la demande: 31.05.2023
(73) Titulaire: STMicroelectronics (Grand Ouest) SAS, 72100 Le Mans (FR)
(72) Inventeur: PALLARDY, Loic, 72700 Rouillon (FR); JAOUEN, Michel, 72530 Yvré-l'Évêque (FR)
(74) Mandataire: Casalonga

(56) Documents cités:
- EP-A1- 1 563 375
- WO-A1-2013/156315
- WO-A1-2016/166450
- WO-A1-2017/019061
- FR-A1- 3 090 923
- US-A1- 2006 143 411

## Description

Des modes de réalisation et de mise en œuvre concernent les systèmes intégrant un ou plusieurs processeurs ou cœurs de processeurs, communiquant avec une mémoire, notamment les systèmes sur puce, et en particulier la gestion dynamique d'un dispositif de pare-feu associé à cette mémoire.

Dans les systèmes sur puce actuels, il y a généralement plusieurs contextes d'exécution, basés sur un ou plusieurs microprocesseurs, qui peuvent avoir des niveaux dits sécurisés ou des niveaux dits non sécurisés. FR 3 090 923 A1 décrit un pare-feu de mémoire définissant des règles d'accès mémoire associées à un composant requérant un accès mémoire sécurisé. WO 2017/019061 A1 décrit une configuration d'un pare-feu adaptée à une stratégie d'accès à une portion d'une mémoire partagée. à

Un contexte d'exécution, ou environnement d'exécution, met en œuvre un microprogramme (« firmware ») et des registres.

Lorsque le contexte ou environnement d'exécution est sécurisé, le firmware est sécurisé ainsi que les registres du microprocesseur associé au contexte d'exécution. A titre d'exemple non limitatif un firmware sécurisé peut être un firmware signé dont la signature a été vérifiée avant son chargement dans la mémoire programme correspondante. Lorsque le contexte ou environnement d'exécution n'est pas sécurisé, le firmware correspondant et les registres correspondants ne sont pas sécurisés.

Par exemple, un système d'exploitation peut prévoir un contexte d'exécution de niveau sécurisé et un contexte d'exécution applicatif, par exemple pour une application multimédias, de niveau non sécurisé.

Dans certains cas, il peut s'avérer avantageux qu'une mémoire ou une zone mémoire puisse être partagée entre des contextes d'exécution sécurisé et non sécurisé.

En d'autres termes, dans ce cas, il peut être avantageux qu'une transaction de niveau sécurisé ou une transaction de niveau non sécurisé, puisse avoir accès à cette mémoire partagée.

Actuellement, pour permettre cette fonctionnalité, on utilise une unité de gestion mémoire (MMU : Management Memory Unit) ou une unité de protection mémoire (MPU : Memory Protection Unit) ou une unité d'attribution de sécurité (SAU : Security Attribution Unit) qui est couplée entre le ou les microprocesseurs implémentant des contextes d'exécution sécurisé et non sécurisé, et la mémoire partagée.

Actuellement, en pratique, toute zone mémoire non sécurisée est accessible par un contexte sécurisé grâce à l'unité MPU ou MMU ou SAU. En effet, du côté contexte d'exécution sécurisé, dès qu'une zone mémoire est déclarée non sécurisée dans l'unité MPU ou MMU ou SAU, tout accès à cette zone mémoire est effectué en tant qu'accès non sécurisé. En d'autres termes, il y a une dégradation du niveau de la transaction (qui passe de sécurisée à non sécurisée) effectuée dans l'unité MPU ou MMU ou SAU.

Il existe actuellement deux façons de procéder.

Selon une première façon, le contexte d'exécution non sécurisé alloue une zone mémoire partagée prédéfinie. Et, cette zone mémoire prédéfinie partagée est déclarée dans l'unité MMU ou MPU ou SAU comme non sécurisée pour permettre un accès à des transactions sécurisées émises depuis le contexte d'exécution sécurisé. Mais, cette zone mémoire partagée est fixe. De ce fait, la taille de cette zone mémoire doit être définie lors de la définition du produit et sa taille prédéfinie peut être un problème pour certaines applications non sécurisées multimédias qui nécessiteraient plus de place mémoire.

Selon une autre façon, le contexte d'exécution non sécurisé alloue une zone mémoire dans la mémoire non sécurisée, et ensuite la partage avec un contexte d'exécution sécurisé. Le contexte d'exécution sécurisé va alors programmer l'unité MMU ou MPU ou SAU pour pouvoir accéder à cette zone mémoire partagée non sécurisée.

Mais, dans le cas où le contexte d'exécution (ou application) non sécurisé s'interrompt (ou s'arrête) le contexte d'exécution (ou application) sécurisé reste opérationnel et peut toujours avoir accès à la zone mémoire non sécurisée. Et cette zone mémoire peut être recyclée par le système et pourrait être réallouée à une autre application non sécurisée. Et comme l'application sécurisée a toujours accès à cette zone mémoire, elle pourrait alors corrompre ou lire des données de la nouvelle application non sécurisée.

En d'autres termes, dans ce cas, le contexte d'exécution sécurisé a un accès direct à la zone mémoire non sécurisée sans contrôle par le contexte d'exécution non sécurisé.

Il existe par conséquent un besoin de gérer plus efficacement et de façon plus sûre, les droits d'accès à une mémoire partagée entre un contexte d'exécution sécurisé et un contexte d'exécution non sécurisé.

Selon un mode de réalisation et de mise en œuvre, il est proposé de gérer dynamiquement les droits d'accès à cette mémoire partagée directement au niveau du pare feu associé à cette zone mémoire et de confier la gestion de ce pare feu au contexte d'exécution non sécurisé qui est en charge de la partie non sécurisée de la mémoire au sein de laquelle il est prévu d'implémenter cette zone mémoire partagée.

Selon un aspect, il est proposé un système, par exemple un système sur puce, comprenant une première unité de traitement configurée pour fonctionner dans un mode sécurisé et générer des requêtes d'accès mémoire ayant un niveau sécurisé, et une deuxième unité de traitement configurée pour fonctionner dans un mode non sécurisé et générer des requêtes d'accès mémoire ayant un niveau non sécurisé.

Les deux unités de traitement peuvent faire partie respectivement de deux microprocesseurs différents.

Il est également possible que le système comprenne un microprocesseur comportant un premier système d'exploitation configuré pour fonctionner dans un contexte d'exécution de niveau sécurisé et formant la première unité de traitement et un deuxième système d'exploitation configuré pour fonctionner dans un contexte d'exécution de niveau non sécurisé et formant la deuxième unité de traitement.

Le système comporte également une mémoire comportant une première zone mémoire pouvant être partagée entre la première unité de traitement et la deuxième unité de traitement, ainsi qu'un dispositif de pare feu couplé entre la mémoire et la première et la deuxième unités de traitement.

Ce dispositif de pare feu possède des premiers moyens de pare feu associés à la première zone mémoire, configurables par la deuxième unité de traitement.

Les premiers moyens de pare feu ont alors une première configuration dans laquelle ils autorisent un accès à la première zone mémoire en présence d'une requête d'accès de niveau sécurisé ou en présence d'une requête d'accès de niveau non sécurisé, et une deuxième configuration dans laquelle ils interdisent un accès à la première zone mémoire en présence d'une requête d'accès de niveau sécurisé et autorisent un accès à la première zone mémoire uniquement en présence d'une requête d'accès de niveau non sécurisé.

Ainsi, la gestion des accès à cette première zone mémoire partagée est prévue au niveau du pare feu lui-même qui est configurable par la deuxième unité de traitement.

Selon un mode de réalisation, la mémoire comporte une région mémoire allouée à la deuxième unité de traitement et contenant la première zone mémoire. Et, la deuxième unité de traitement est configurée pour définir ladite première zone mémoire au sein de ladite région mémoire.

En d'autres termes, le contexte non sécurisé (deuxième unité de traitement) à qui est allouée la région mémoire peut décider quelle partie de cette région mémoire il souhaite partager avec le contexte sécurisé.

Selon un mode de réalisation, la mémoire comporte par ailleurs une deuxième zone mémoire allouée à la première unité de traitement et ladite région de mémoire comporte une troisième zone mémoire réservée à la deuxième unité de traitement.

Le dispositif de pare feu comporte alors des deuxièmes moyens de pare feu associés à la deuxième zone mémoire et configurés pour autoriser l'accès à la deuxième zone mémoire uniquement en présence de requêtes de niveau sécurisé, et des troisièmes moyens de pare feu associés à la troisième zone mémoire et configurés pour autoriser l'accès à la troisième zone mémoire uniquement en présence de requêtes de niveau non sécurisé.

Selon un mode de réalisation, les requêtes d'accès mémoire peuvent comporter des indications représentatives du niveau sécurisé ou non sécurisé de ces requêtes.

Les premier, deuxième et troisième moyens de pare feu comportent alors par exemple des jeux de registres respectivement associés aux trois zones mémoire et contenant des informations représentatives des droits d'accès sécurisés et/ou non sécurisés à ces zones mémoire, ainsi que des moyens de vérification configurés pour comparer l'indication d'une requête d'accès à une zone mémoire avec les informations contenues dans le jeu de registres correspondant et autoriser ou interdire l'accès à ladite zone mémoire en fonction du résultat de la comparaison.

Et, le contenu du ou des registres associés à la première zone mémoire est modifiable sur commande issue de la deuxième unité de traitement.

Cette commande issue de la deuxième unité de traitement peut par exemple transiter par un contrôleur de configuration qui va modifier le contenu du ou des registres associés à la première zone mémoire.

Le système comprend avantageusement une unité de gestion mémoire couplée entre le dispositif de pare feu et les deux unités de traitement. Et, l'unité de gestion mémoire est configurée pour ne pas dégrader le niveau de sécurité d'une requête d'accès ayant un niveau sécurisé.

En d'autres termes, contrairement à l'art antérieur, il n'est pas nécessaire de reprogrammer l'unité de gestion mémoire pour autoriser une requête d'accès sécurisé à accéder à la première zone mémoire puisque c'est le pare feu lui-même associé à cette première zone mémoire qui va autoriser ou interdire l'accès à cette requête. En d'autres termes, la requête d'accès qui a un niveau sécurisé et qui est délivrée à l'unité de gestion mémoire, ressort de cette unité de gestion mémoire avec également le niveau d'accès sécurisé.

Selon un autre aspect, il est proposé un procédé de gestion des accès à une mémoire d'un système, par exemple incorporé au sein d'un système sur puce.

Le système comprend
- une première unité de traitement fonctionnant dans un mode sécurisé et générant des requêtes d'accès mémoire ayant un niveau sécurisé,
- une deuxième unité de traitement fonctionnant dans un mode non sécurisé et générant des requêtes d'accès mémoire ayant un niveau non sécurisé,
- la mémoire comportant une première zone mémoire partagée entre la première unité de traitement et la deuxième unité de traitement,
- un dispositif de pare-feu couplé entre la mémoire et la première et la deuxième unités de traitement, ayant des premiers moyens de pare feu configurables associés à la première zone mémoire.

Dans le procédé selon cet aspect, la deuxième unité de traitement configure les premiers moyens de pare feu
- pour les placer dans une première configuration dans laquelle ils autorisent un accès à la première zone mémoire en présence d'une requête d'accès de niveau sécurisé ou en présence d'une requête d'accès de niveau non sécurisé, ou
- pour les placer dans une deuxième configuration dans laquelle ils interdisent un accès à la première zone mémoire en présence d'une requête d'accès de niveau sécurisé et autorisent un accès à la première zone mémoire uniquement en présence d'une requête d'accès de niveau non sécurisé.

Selon un mode de mise en œuvre, la mémoire comporte une région mémoire allouée à la deuxième unité de traitement et contenant la première zone mémoire, et la deuxième unité de traitement définit ladite première zone mémoire au sein de ladite région mémoire.

Selon un mode de mise en œuvre, la mémoire comporte une deuxième zone mémoire allouée à la première unité de traitement et ladite région mémoire comporte une troisième zone mémoire réservée à la deuxième unité de traitement, et on équipe le dispositif de pare feu de deuxièmes moyens de pare feu associés à la deuxième zone mémoire et autorisant l'accès à la deuxième zone mémoire uniquement en présence de requêtes de niveau sécurisé, et de troisièmes moyens de pare feu associés à la troisième zone mémoire et autorisant l'accès à la troisième zone mémoire uniquement en présence de requêtes de niveau non sécurisé.

D'autres avantages et caractéristiques de l'invention apparaîtront à l'examen de la description détaillée de modes de réalisation et de mise en œuvre, nullement limitatifs, et des dessins annexés sur lesquels :
[Fig 1]
[Fig 2]
[Fig 3]
[Fig 4]
[Fig 5]
[Fig 6]
[Fig 7]
[Fig 8]
[Fig 9]
[Fig 10]

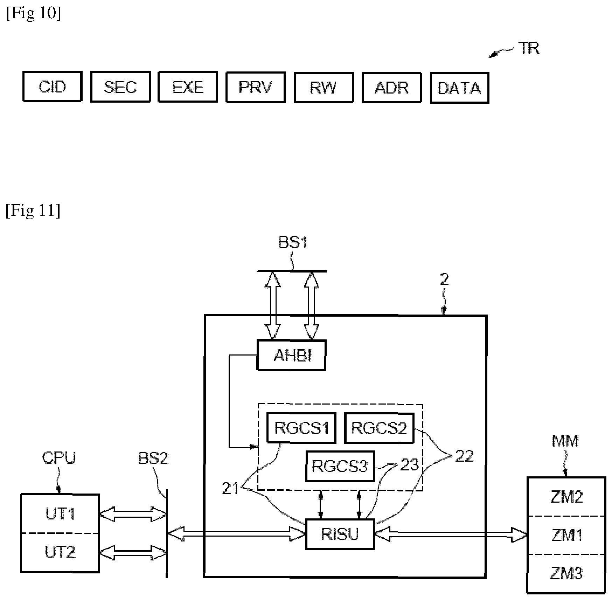

[Fig 11] illustrent de façon schématique des modes de mise en œuvre et de réalisation de l'invention.

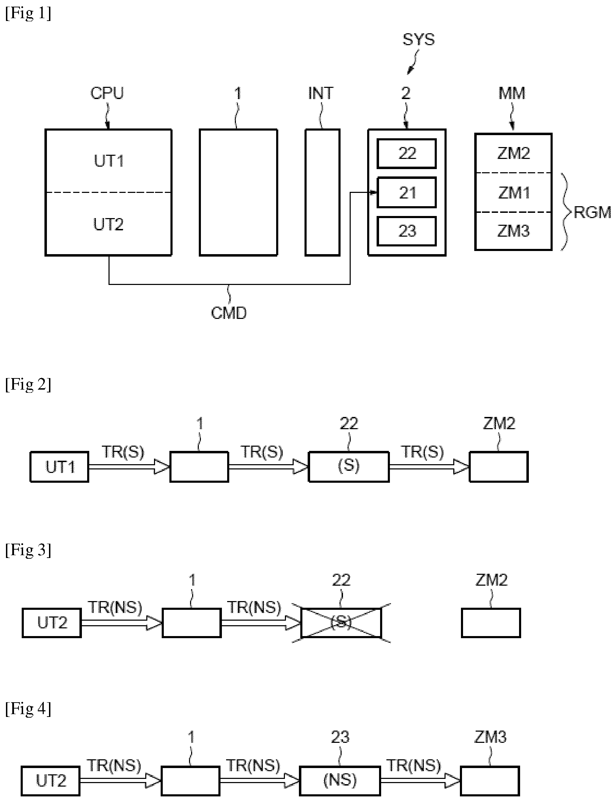

Sur la figure 1, la référence SYS désigne un système, par exemple mais non limitativement, un système sur puce, par exemple mais non limitativement, un système sur puce du type de celui décrit dans la demande de brevet français n°3103586 comprenant plusieurs équipements maîtres, plusieurs ressources esclaves, et un circuit d'interconnexion couplé entre les équipements maîtres et les ressources esclaves et capable de router des transactions entre des équipements maîtres et des ressources esclaves.

L'homme du métier pourra, à toutes fins utiles, se référer à cette demande de brevet français précitée, dont le contenu est incorporé ici par référence.

Dans l'exemple de système SYS décrit ici, la référence CPU désigne un équipement maître, par exemple un microprocesseur, comportant une première unité de traitement UT1 et une deuxième unité de traitement UT2.

Ici, le microprocesseur CPU comporte par exemple un premier système d'exploitation configuré pour fonctionner dans un contexte d'exécution de niveau sécurisé et formant la première unité de traitement UT1 et un deuxième système d'exploitation configuré pour fonctionner dans un contexte d'exploitation de niveau non sécurisé, par exemple une application multimédia, et formant la deuxième unité de traitement UT2.

Bien entendu, il serait possible de prévoir deux microprocesseurs distincts incorporant respectivement les deux unités de traitement UT1 et UT2.

Le système SYS comporte également ici une mémoire MM qui peut être, dans le cas d'un système sur puce, une ressource esclave.

La mémoire MM comporte ici une région mémoire RGM allouée à la deuxième unité de traitement UT2 et incluant une première zone mémoire ZM1 et une troisième zone mémoire ZM3.

Comme on le verra plus en détail ci-après, la première zone mémoire ZM1 a vocation à être partagée entre la première unité de traitement UT1 et la deuxième unité de traitement UT2 pour pouvoir recevoir éventuellement des requêtes d'accès mémoire de niveau sécurisé ou des requêtes d'accès mémoire de niveau non sécurisé.

Par contre, la troisième zone mémoire ZM3 est destinée à recevoir uniquement des requêtes d'accès mémoire de niveau non sécurisé.

La mémoire MM comporte également une deuxième zone mémoire ZM2 allouée à la première unité de traitement UT1 et destinée à recevoir uniquement des requêtes d'accès mémoire de niveau sécurisé.

Le système SYS comporte également une unité de gestion mémoire (MMU) ou bien une unité de protection mémoire (MPU) ou bien une unité d'attribution de sécurité (SAU) référencée par la référence 1.

La structure d'une telle unité est classique et connue en soi.

Cette unité 1 est couplée au microprocesseur CPU.

Lorsque le système est un système sur puce, il comporte également généralement un circuit d'interconnexion INT destiné à router les requêtes ou transactions émises par les différents équipements maîtres dont le microprocesseur CPU, vers les ressources esclaves.

Un tel circuit d'interconnexion est par exemple celui évoqué dans la demande de brevet français précitée.

Le système SYS comporte par ailleurs un dispositif de pare feu 2 dont on décrira plus en détail ci-après un exemple non limitatif de réalisation, couplé entre l'unité 1 et la mémoire MM.

Le dispositif de pare feu 2 comprend des premiers moyens de pare feu 21 associés à la première zone mémoire ZM1, des deuxièmes moyens de pare feu 22 associés à la deuxième zone mémoire ZM2 et des troisièmes moyens de pare feu 23 associés à la troisième zone mémoire ZM3.

On reviendra plus en détail ci-après sur un exemple de structure de ces moyens 21, 22 et 23.

Mais on peut d'ores et déjà indiquer que les premiers moyens de pare feu 21 sont configurables par la deuxième unité de traitement UT2, par exemple en réponse à une commande CMD.

Plus précisément, ces premiers moyens de pare feu 21 ont une première configuration dans laquelle ils autorisent un accès à la première zone mémoire ZM1 en présence d'une requête d'accès de niveau sécurisé ou en présence d'une requête d'accès de niveau non sécurisé.

Les premiers moyens de pare feu 21 peuvent également avoir une deuxième configuration dans laquelle ils interdisent un accès à la première zone mémoire en présence d'une requête d'accès de niveau sécurisé et autorisent un accès à la première zone mémoire uniquement en présence d'une requête de niveau non sécurisé.

La gestion des droits d'accès par le dispositif de pare feu 2 est illustrée plus en détail sur les figures 2 à 9.

Sur ces figures, la référence TR désigne une requête d'accès mémoire ou transaction qui peut être émise par la première unité de traitement UT1 ou par la deuxième unité de traitement UT2 et qui est destinée à l'une des trois zones mémoire ZM1, ZM2, ZM3.

La lettre (S) signifie que la transaction ou requête d'accès mémoire TR, que ce soit en écriture et/ou en lecture, a un niveau sécurisé.

Les lettres (NS) signifient que cette transaction a un niveau non sécurisé.

Sur la figure 2, une transaction TR de niveau sécurisé (S) est émise par la première unité de traitement UT1 qui a un contexte d'exécution sécurisé. Cette transaction TR de niveau sécurisé est destinée à la deuxième zone mémoire ZM2. Elle est relayée par l'unité 1 sans dégradation de son niveau de sécurité c'est-à-dire qu'à la sortie de l'unité 1 elle conserve un niveau sécurisé.

Et, comme les deuxièmes moyens de pare feu 22 sont configurés pour ne laisser passer que les transactions ayant un niveau sécurisé (S), la transaction TR est bien autorisée à accéder à la deuxième zone mémoire ZM2.

Sur la figure 3, on a cette fois-ci une transaction TR de niveau non sécurisé (NS) émise par l'unité UT2 et destinée également à la deuxième zone mémoire ZM2.

Après passage dans l'unité 1, cette transaction TR atteint les deuxièmes moyens de pare feu 22. Cependant, comme la transaction a un niveau non sécurisé, les moyens de pare feu 22 interdisent l'accès de cette transaction TR à la deuxième zone mémoire ZM2.

Sur la figure 4, une transaction TR de niveau non sécurisé (NS) est émise par la deuxième unité de traitement UT2 à destination de la troisième zone mémoire ZM3.

Après passage dans l'unité 1, celle-ci est autorisée à accéder à la troisième zone mémoire ZM3 par les troisièmes moyens de pare feu 23.

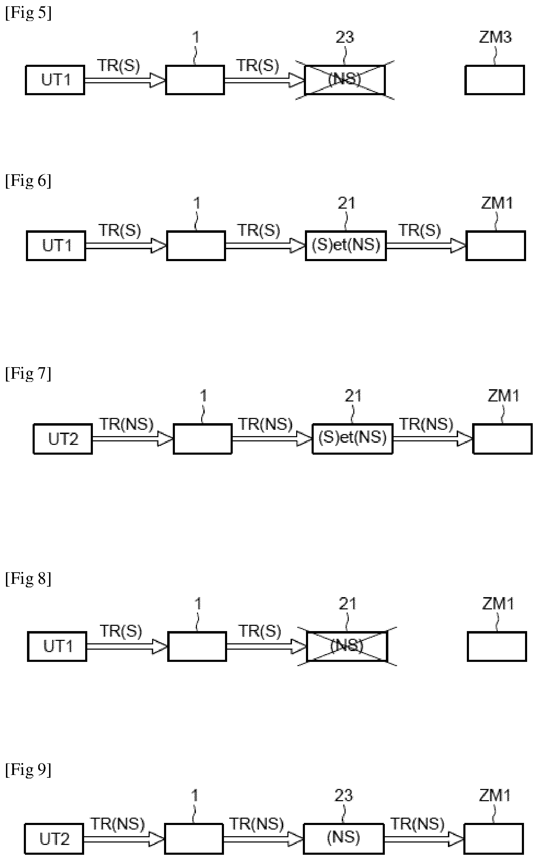

Par contre, comme illustré sur la figure 5, une transaction TR de niveau sécurisé émise par la première unité de traitement UT1 et à destination de cette troisième zone mémoire ZM3 est bloquée par les troisièmes moyens de pare feu 23.

Sur la figure 6, les premiers moyens de pare feu 21 sont dans leur première configuration c'est-à-dire qu'ils vont autoriser un accès à la première zone mémoire ZM1 pour une transaction TR qui est soit sécurisée (S) soit non sécurisée (NS).

Ainsi, une transaction sécurisée TR émise par la première unité de traitement UT1 après avoir traversé l'unité 1 sans avoir vu son niveau de sécurité dégradé, franchit les premiers moyens de pare feu 21 et accède à la première zone mémoire ZM1.

C'est également le cas, comme illustré sur la figure 7, pour une transition TR non sécurisée émise par la deuxième unité de traitement UT2 puisque les premiers moyens de pare feu 21 sont dans leur première configuration.

Par contre, comme illustré sur les figures 8 et 9, les premiers moyens de pare-feu 21 sont dans leur deuxième configuration dans laquelle ils n'autorisent un accès à la première zone mémoire ZM1 uniquement pour des transitions ou requêtes d'accès TR ayant un niveau non sécurisé.

Aussi, une requête d'accès TR sécurisée émise par l'unité UT1 va être bloquée par les premiers moyens de pare feu 21 et n'atteindra pas la première zone mémoire ZM1 (figure 8).

Par contre, une transition non sécurisée émise par la deuxième unité de traitement UT2 va cette fois-ci pouvoir atteindre la première zone mémoire ZM1 (figure 9).

La configuration du système allouant à la deuxième unité de traitement la gestion de la région mémoire RGM et à la première unité de traitement la deuxième zone mémoire ZM2 destinée à être une zone mémoire sécurisée, peut être par exemple définie lors de l'initialisation du système par une entité de sécurité, par exemple un équipement maître désigné.

En variante, il est possible que la gestion des droits d'accès de la première zone mémoire ZM1 soit déléguée à la deuxième unité de traitement en cours de fonctionnement. A cet égard, la présente invention est compatible avec l'invention décrite dans la demande de brevet français intitulée « Gestion d'un pare feu de mémoire dans un système sur puce », déposée le même jour que la présente demande de brevet aux noms de STMicroelectronics (Alps) SAS » et STMicroelectronics (Grand Ouest) SAS.

La présente invention est également compatible avec l'invention décrite dans la demande de brevet ayant pour titre « Procédé d'exécution d'un programme logiciel par une unité de traitement comprenant une phase de compilation » et déposée le même jour que la présente demande de brevet au nom de STMicroelectronics (Grand Ouest) SAS.

En effet un aspect de cette invention objet de cette demande de brevet, propose en particulier une unité de traitement adaptée pour avoir un contexte d'exécution de niveau de droits d'accès sécurisé et un contexte d'exécution de niveau de droits d'accès non-sécurisé, l'unité de traitement étant par exemple capable de traiter des instructions ayant un niveau de droits d'accès exclusivement sécurisé et étant matériellement configurée de sorte qu'une exécution desdites instructions peut permettre d'accéder à des zones mémoires de niveau de droit d'accès sécurisé, et ne peut pas permettre d'accéder à des zones mémoires de niveau de droit d'accès non-sécurisé.

Cependant les instructions ayant un niveau de droits d'accès exclusivement sécurisé pourront néanmoins permettre ici d'avoir accès à la première zone mémoire ZM1 dans la première configuration du pare feu.

On se réfère maintenant plus particulièrement à la figure 10 pour décrire un exemple de contenu d'une transaction ou requête d'accès TR.

D'une façon générale, ici, chaque transaction TR émise par un équipement maître, telle que la première unité UT1 ou la deuxième unité UT2 comprend un champ d'adressage ADR dont le contenu est destiné à adresser la zone mémoire destinataire de cette transaction.

Chaque transaction TR comporte une information d'identification CID de l'équipement maître émetteur de cette transaction, une indication de sécurité SEC, une indication EXE destinée à indiquer si cette transaction contient ou non une instruction d'exécution, une information de privilège PRV et une information RW indiquant s'il s'agit d'une transaction en lecture ou en écriture ainsi qu'un champ d'adressage ADR et un champ de données DATA.

Le niveau de sécurité de la transaction est donc défini par l'indication de sécurité SEC qui peut être par exemple 1 bit.

Sur la figure 11, on voit que les premiers moyens de pare feu 21 du dispositif de pare feu 2 comprennent un ou plusieurs registres RGCS1 associés à des moyens de vérification RISU.

Les deuxièmes moyens de pare feu 22 comportent un ou plusieurs registres RGCS2 associés aux moyens de vérification RISU et les troisièmes moyens de pare feu 23 comprennent un ou plusieurs registres RGCS3 associés aux moyens de vérification RISU.

Les registres RGCS 1 sont associés à la première zone mémoire ZM1, les registres RGCS2 sont associés à la deuxième zone mémoire ZM2 et les registres RGCS3 sont associés à la troisième zone mémoire ZM3.

Et, ces registres contiennent les informations représentatives du niveau de sécurité S et/ou NS.

Les transactions TR émises par les différents équipements maîtres UT1, UT2 sont transmises sur un bus BS2 puis aux moyens de vérification RISU.

Les moyens de vérification sont configurés pour comparer l'indication SEC d'une requête d'accès à une zone mémoire avec les informations contenues dans le jeu de registres correspondant RGCSi de façon à autoriser ou interdire l'accès à ladite zone mémoire en fonction du résultat de la comparaison.

A titre d'exemple, les moyens de vérification RISU peuvent comporter un ou plusieurs circuits logiques.

La modification du contenu des registres RGCS 1 de façon à configurer le premier moyen de pare feu 21 peut être obtenue par une commande transitant sur un bus BS1, par exemple un bus du type AHB (« Advanced High Performance Bus »), par l'intermédiaire d'une interface AHBI.

## Revendications

1. Système, comprenant une première unité de traitement (UT1) configurée pour fonctionner dans un mode sécurisé et générer des requêtes d'accès mémoire ayant un niveau sécurisé, une deuxième unité de traitement (UT2) configurée pour fonctionner dans un mode non sécurisé et générer des requêtes d'accès mémoire ayant un niveau non sécurisé, une mémoire (MM) comportant une première zone mémoire (ZM1) pouvant être partagée entre la première unité de traitement et la deuxième unité de traitement, un dispositif de pare-feu (2) couplé entre la mémoire et la première et la deuxième unités de traitement, ayant des premiers moyens de pare feu (21) associés à la première zone mémoire, configurables par la deuxième unité de traitement, et ayant une première configuration dans laquelle ils autorisent un accès à la première zone mémoire en présence d'une requête d'accès de niveau sécurisé ou en présence d'une requête d'accès de niveau non sécurisé, et une deuxième configuration dans laquelle ils interdisent un accès à la première zone mémoire en présence d'une requête d'accès de niveau sécurisé et autorisent un accès à la première zone mémoire uniquement en présence d'une requête d'accès de niveau non sécurisé.

2. Système selon la revendication 1, dans lequel la mémoire comporte une région mémoire (RGM) allouée à la deuxième unité de traitement et contenant la première zone mémoire (ZM1), et la deuxième unité de traitement (UT2) est configurée pour définir ladite première zone mémoire au sein de ladite région mémoire.

3. Système selon la revendication 2, dans lequel la mémoire comporte une deuxième zone mémoire (ZM2) allouée à la première unité de traitement et ladite région mémoire comporte une troisième zone mémoire (ZM3) réservée à la deuxième unité de traitement, et le dispositif de pare feu comporte des deuxièmes moyens de pare feu (22) associés à la deuxième zone mémoire et configurés pour autoriser l'accès à la deuxième zone mémoire uniquement en présence de requêtes de niveau sécurisé, et des troisièmes moyens de pare feu (23) associés à la troisième zone mémoire et configurés pour autoriser l'accès à la troisième zone mémoire uniquement en présence de requêtes de niveau non sécurisé.

4. Système selon la revendication 3, dans lequel les requêtes d'accès mémoires comportent des indications représentatives du niveau sécurisé ou non sécurisé, et les premiers, deuxièmes et troisièmes moyens de pare feu comportent des jeux de registres (RGCS1-RGCS3) respectivement associés aux trois zones mémoires et contenant des informations représentatives des droits d'accès sécurisés et/ou non sécurisés à ces zones mémoires, ainsi que des moyens de vérification (RISU) configurés pour comparer l'indication d'une requête d'accès à une zone mémoire avec les informations contenues dans le jeu de registres correspondant et autoriser ou interdire l'accès à ladite zone mémoire en fonction du résultat de la comparaison.

5. Système selon la revendication 4, dans lequel le contenu du ou des registres (RGCS1) associés à la première zone mémoire sont modifiables sur commande issue de la deuxième unité de traitement.

6. Système selon l'une des revendications précédentes, comprenant une unité de gestion mémoire (1) couplée entre le dispositif de pare feu et les deux unités de traitements, l'unité de gestion mémoire étant configurée pour ne pas dégrader le niveau de sécurité d'une requête d'accès ayant un niveau sécurisé.

7. Système selon l'une des revendications précédentes, comprenant un microprocesseur comportant un premier système d'exploitation configuré pour fonctionner dans un contexte d'exécution de niveau sécurisé et formant la première unité de traitement (UT1) et un deuxième système d'exploitation configuré pour fonctionner dans un contexte d'exécution de niveau non-sécurisé et formant la deuxième unité de traitement (UT2).

8. Système selon l'une des revendications précédentes, incorporé au sein d'un système sur puce (SYS).

9. Procédé de gestion des accès à une mémoire d'un système, le système comprenant une première unité de traitement (UT1) fonctionnant dans un mode sécurisé et générant des requêtes d'accès mémoire ayant un niveau sécurisé, une deuxième unité de traitement (UT2) fonctionnant dans un mode non sécurisé et générant des requêtes d'accès mémoire ayant un niveau non sécurisé, la mémoire (MM) comportant une première zone mémoire (ZM1) partagée entre la première unité de traitement et la deuxième unité de traitement, un dispositif de pare-feu (2) couplé entre la mémoire et la première et la deuxième unités de traitement, ayant des premiers moyens de pare feu configurables (21) associés à la première zone mémoire, le procédé dans lequel la deuxième unité de traitement configure les premiers moyens de pare feu pour les placer dans une première configuration dans laquelle ils autorisent un accès à la première zone mémoire en présence d'une requête d'accès de niveau sécurisé ou en présence d'une requête d'accès de niveau non sécurisé, ou pour les placer dans une deuxième configuration dans laquelle ils interdisent un accès à la première zone mémoire en présence d'une requête d'accès de niveau sécurisé et autorisent un accès à la première zone mémoire uniquement en présence d'une requête d'accès de niveau non sécurisé.

10. Procédé selon la revendication 9, dans lequel la mémoire comporte une région mémoire (RGM) allouée à la deuxième unité de traitement et contenant la première zone mémoire (ZM1), et la deuxième unité de traitement (UT2) définit ladite première zone mémoire au sein de ladite région mémoire.

11. Procédé selon la revendication 10, dans lequel la mémoire comporte une deuxième zone mémoire (ZM2) allouée à la première unité de traitement et ladite région mémoire comporte une troisième zone mémoire (ZM3) réservée à la deuxième unité de traitement, et dans lequel on équipe le dispositif de pare feu de deuxièmes moyens de pare feu (22) associés à la deuxième zone mémoire et autorisant l'accès à la deuxième zone mémoire uniquement en présence de requêtes de niveau sécurisé, et de troisièmes moyens de pare feu (23) associés à la troisième zone mémoire et autorisant l'accès à la troisième zone mémoire uniquement en présence de requêtes de niveau non sécurisé.

12. Procédé selon l'une des revendications 9 à 11, dans lequel le système (SYS) est incorporé au sein d'un système sur puce.

## Patentansprüche

1. System, das eine erste Verarbeitungseinheit (UT1) umfasst, die konfiguriert ist, um in einem gesicherten Modus zu arbeiten und Speicherzugriffsanfragen zu erzeugen, die eine gesicherte Ebene aufweisen, eine zweite Verarbeitungseinheit (UT2), die konfiguriert ist, um in einem ungesicherten Modus zu arbeiten und Speicherzugriffsanfragen zu erzeugen, die eine ungesicherte Ebene aufweisen, einen Speicher (MM), der einen ersten Speicherbereich (ZM1) beinhaltet, der von der ersten Verarbeitungseinheit und der zweiten Verarbeitungseinheit gemeinsam genutzt werden kann, eine Firewall-Vorrichtung (2), die zwischen dem Speicher und der ersten und der zweiten Verarbeitungseinheit gekoppelt ist, die erste Firewall-Mittel (21) aufweist, die dem ersten Speicherbereich zugeordnet sind, die von der zweiten Verarbeitungseinheit konfigurierbar sind, und eine erste Konfiguration aufweisen, in der sie bei Vorliegen einer Zugriffsanfrage einer gesicherten Ebene oder bei Vorliegen einer Zugriffsanfrage einer ungesicherten Ebene einen Zugriff auf den ersten Speicherbereich zulassen, und eine zweite Konfiguration, in der sie bei Vorliegen einer Zugriffsanfrage einer gesicherten Ebene einen Zugriff auf den ersten Speicherbereich verweigern und nur bei Vorliegen einer Zugriffsanfrage einer ungesicherten Ebene einen Zugriff auf den ersten Speicherbereich zulassen.

2. System nach Anspruch 1, wobei der Speicher eine Speicherregion (RGM) beinhaltet, die der zweiten Verarbeitungseinheit zugewiesen ist und den ersten Speicherbereich (ZM1) enthält, und die zweite Verarbeitungseinheit (UT2) konfiguriert ist, um den ersten Speicherbereich innerhalb der Speicherregion zu definieren.

3. System nach Anspruch 2, wobei der Speicher einen zweiten Speicherbereich (ZM2) beinhaltet, welcher der ersten Verarbeitungseinheit zugewiesen ist, und die Speicherregion einen dritten Speicherbereich (ZM3) beinhaltet, welcher der zweiten Verarbeitungseinheit vorbehalten ist, und die Firewall-Vorrichtung zweite Firewall-Mittel (22) beinhaltet, die dem zweiten Speicherbereich zugeordnet sind und konfiguriert sind, um den Zugriff auf den zweiten Speicherbereich nur bei Vorliegen von Anfragen einer gesicherten Ebene zuzulassen, und dritte Firewall-Mittel (23), die dem dritten Speicherbereich zugeordnet sind und konfiguriert sind, um den Zugriff auf den dritten Speicherbereich nur bei Vorliegen von Anfragen einer ungesicherten Ebene zuzulassen.

4. System nach Anspruch 3, wobei die Speicherzugriffsanfragen Angaben beinhalten, die repräsentativ für die gesicherte oder ungesicherte Ebene sind, und die ersten, zweiten und dritten Firewall-Mittel Registersätze (RGCS1-RGCS3) beinhalten, die jeweils den drei Speicherbereichen zugeordnet sind und Informationen enthalten, die repräsentativ für die gesicherten und/oder ungesicherten Zugriffsrechte auf diese Speicherbereiche sind, sowie Verifizierungsmittel (RISU), die konfiguriert sind, um die Angabe einer Zugriffsanfrage auf einen Speicherbereich mit den in dem entsprechenden Registersatz enthaltenen Informationen zu vergleichen und den Zugriff auf den Speicherbereich in Abhängigkeit von dem Ergebnis des Vergleichs zuzulassen oder zu untersagen.

5. System nach Anspruch 4, wobei der Inhalt des oder der Register(s) (RGCS1), die dem ersten Speicherbereich zugeordnet sind, auf einen von der zweiten Verarbeitungseinheit stammenden Befehl hin modifizierbar sind.

6. System nach einem der vorstehenden Ansprüche, das eine Speicherverwaltungseinheit (1) umfasst, die zwischen der Firewall-Vorrichtung und den beiden Verarbeitungseinheiten gekoppelt ist, wobei die Speicherverwaltungseinheit konfiguriert ist, um die Sicherheitsebene einer Zugriffsanfrage, die eine gesicherte Ebene aufweist, nicht herabzusetzen.

7. System nach einem der vorstehenden Ansprüche, das einen Mikroprozessor umfasst, der ein erstes Betriebssystem beinhaltet, das konfiguriert ist, um in einem Ausführungskontext einer gesicherten Ebene zu arbeiten und die erste Verarbeitungseinheit (UT1) bildet, und ein zweites Betriebssystem, das konfiguriert ist, um in einem Ausführungskontext einer ungesicherten Ebene zu arbeiten und die zweite Verarbeitungseinheit (UT2) bildet.

8. System nach einem der vorstehenden Ansprüche, das in ein System auf einem Chip (SYS) integriert ist.

9. Verfahren zur Verwaltung der Zugriffe auf einen Speicher eines Systems, wobei das System eine erste Verarbeitungseinheit (UT1) umfasst, die in einem gesicherten Modus arbeitet und Speicherzugriffsanfragen erzeugt, die eine gesicherte Ebene aufweisen, eine zweite Verarbeitungseinheit (UT2), die in einem ungesicherten Modus arbeitet und Speicherzugriffsanfragen erzeugt, die eine ungesicherte Ebene aufweisen, wobei der Speicher (MM) einen ersten Speicherbereich (ZM1) beinhaltet, der von der ersten Verarbeitungseinheit und der zweiten Verarbeitungseinheit gemeinsam genutzt wird, eine Firewall-Vorrichtung (2), die zwischen dem Speicher und der ersten und der zweiten Verarbeitungseinheit gekoppelt ist,die erste Firewall-Mittel (21) aufweist, die dem ersten Speicherbereich zugeordnet sind, wobei bei dem Verfahren die zweite Verarbeitungseinheit die ersten Firewall-Mittel konfiguriert, um in eine erste Konfiguration platziert zu werden, in der sie bei Vorliegen einer Zugriffsanfrage einer gesicherten Ebene oder bei Vorliegen einer Zugriffsanfrage einer ungesicherten Ebene einen Zugriff auf den ersten Speicherbereich zulassen, oder in eine zweite Konfiguration platziert zu werden, in der sie bei Vorliegen einer Zugriffsanfrage einer gesicherten Ebene einen Zugriff auf den ersten Speicherbereich untersagen und nur bei Vorliegen einer Zugriffsanfrage einer ungesicherten Ebene einen Zugriff auf den ersten Speicherbereich zulassen.

10. Verfahren nach Anspruch 9, wobei der Speicher eine Speicherregion (RGM) beinhaltet, die der zweiten Verarbeitungseinheit zugewiesen ist und den ersten Speicherbereich (ZM1) enthält, und die zweite Verarbeitungseinheit (UT2) den ersten Speicherbereich innerhalb der Speicherregion definiert.

11. Verfahren nach Anspruch 10, wobei der Speicher einen zweiten Speicherbereich (ZM2) beinhaltet, welcher der ersten Verarbeitungseinheit zugewiesen ist, und die Speicherregion einen dritten Speicherbereich (ZM3) beinhaltet, welcher der zweiten Verarbeitungseinheit vorbehalten ist, und wobei die Firewall-Vorrichtung mit zweiten Firewall-Mitteln (22) ausgestattet wird, die dem zweiten Speicherbereich zugeordnet sind und den Zugriff auf den zweiten Speicherbereich nur bei Vorliegen von Anfragen einer gesicherten Ebene zulassen, und mit dritten Firewall-Mitteln (23), die dem dritten Speicherbereich zugeordnet sind und den Zugriff auf den dritten Speicherbereich nur bei Vorliegen von Anfragen einer ungesicherten Ebene zulassen.

12. Verfahren nach einem der Ansprüche 9 bis 11, wobei das System (SYS) in ein System auf einem Chip integriert ist.

## Claims

1. System, comprising a first processing unit (UT1) configured to operate in a secure mode and generate memory access requests having a secure level, a second processing unit (UT2) configured to operate in a non-secure mode and generate memory access requests having a non-secure level, a memory (MM) including a first memory area (ZM1) which can be shared between the first processing unit and the second processing unit, a firewall device (2) coupled between the memory and the first and second processing units, having first firewall means (21) associated with the first memory area, configurable by the second processing unit, and having a first configuration in which they allow access to the first memory area in the presence of a secure-level access request or in the presence of a non-secure-level access request, and a second configuration in which they deny access to the first memory area in the presence of a secure-level access request and allow access to the first memory area only in the presence of a non-secure-level access request.

2. System according to claim 1, wherein the memory includes a memory region (RGM) allocated to the second processing unit and containing the first memory area (ZM1), and the second processing unit (UT2) is configured to define said first memory area within said memory region.

3. System according to claim 2, wherein the memory includes a second memory area (ZM2) allocated to the first processing unit and said memory region includes a third memory area (ZM3) reserved for the second processing unit, and the firewall device includes second firewall means (22) associated with the second memory area and configured to allow access to the second memory area only in the presence of secure-level requests, and third firewall means (23) associated with the third memory area and configured to allow access to the third memory area only in the presence of non-secure-level requests.

4. System according to claim 3, wherein the memory access requests include indications representing the secure or non-secure level, and the first, second and third firewall means include register sets (RGCS 1-RGCS3) respectively associated with the three memory areas and containing information representing the secure and/or non-secure access rights to these memory areas, as well as verification means (RISU) configured to compare the indication of an access request to a memory area with the information contained in the corresponding register set and to allow or deny access to said memory area based on the result of the comparison.

5. System according to claim 4, wherein the contents of the register(s) (RGCS1) associated with the first memory area can be modified in response to a command from the second processing unit.

6. System according to any one of the preceding claims, comprising a memory management unit (1) coupled between the firewall device and the two processing units, the memory management unit being configured so as not to degrade the security level of an access request having a secure level.

7. System according to any one of the preceding claims, comprising a microprocessor including a first operating system configured to operate in a secure-level execution context and forming the first processing unit (UT1), and a second operating system configured to operate in a non-secure-level execution context and forming the second processing unit (UT2).

8. System according to any one of the preceding claims, incorporated within a system on a chip (SoC).

9. Method for managing access to a memory of a system, the system comprising a first processing unit (UT1) operating in a secure mode and generating memory access requests with a secure level, a second processing unit (UT2) operating in a non-secure mode and generating memory access requests with a non-secure level, the memory (MM) including a first memory area (ZM1) shared between the first processing unit and the second processing unit, a firewall device (2) coupled between the memory and the first and second processing units, having first configurable firewall means (21) associated with the first memory area, the method in which the second processing unit configures the first firewall means to place them in a first configuration in which they allow access to the first memory area in the presence of a secure-level access request or in the presence of a non-secure-level access request, or to place them in a second configuration in which they deny access to the first memory area in the presence of a secure-level access request and allow access to the first memory area only in the presence of a non-secure-level access request.

10. Method according to claim 9, wherein the memory includes a memory region (RGM) allocated to the second processing unit and containing the first memory area (ZM1), and the second processing unit (UT2) defines said first memory area within said memory region.

11. Method according to claim 10, wherein the memory includes a second memory area (ZM2) allocated to the first processing unit and said memory region includes a third memory area (ZM3) reserved for the second processing unit, and wherein the firewall device is equipped with second firewall means (22) associated with the second memory area and allowing access to the second memory area only in the presence of secure-level requests, and third firewall means (23) associated with the third memory area and allowing access to the third memory area only in the presence of non-secure-level requests.

12. Method according to any one of claims 9 to 11, wherein the system (SYS) is incorporated into a system on a chip.
